# EUROPÄISCHE PATENTSCHRIFT

(11) **EP 1 904 295 B1**
(45) Veröffentlichungstag und Bekanntmachung des Hinweises auf die Patenterteilung: **22.12.2010**
(21) Anmeldenummer: 06742612.2
(22) Anmeldetag: 20.04.2006
(51) Int. Cl.: B32B 5/26, A41D 31/02, A41D 27/06

(54) **FIXIERBARER EINLAGESTOFF AUS VLIESSTOFF ZUR VERWENDUNG IN DER TEXTILINDUSTRIE**
FIXABLE NONWOVEN INTERLINING MATERIAL USED IN THE TEXTILE INDUSTRY
DOUBLURE EN NON-TISSE, POUVANT ETRE FIXEE ET DESTINEE A L'INDUSTRIE TEXTILE

(30) Priorität: 01.06.2005 DE 102005025550
(43) Veröffentlichungstag der Anmeldung: 02.04.2008
(73) Patentinhaber: Carl Freudenberg KG, 69469 Weinheim (DE)
(72) Erfinder: KALBE, Michael, E-08190 Sant Cugat (ES); Staudenmayer, Oliver, 69469 Weinheim (DE); Jöst, Manfred, 69502 Hemsbach (DE); Rudek, Peter, 67547 Worms (DE)
(86) Internationale Anmeldenummer: PCT/EP2006/003595
(87) Internationale Veröffentlichungsnummer: WO 2006/128521

(56) Entgegenhaltungen:
- GB-A- 1 556 504
- JP-A- 53 126 363
- JP-A- 63 235 509
- PATENT ABSTRACTS OF JAPAN Bd. 1995, Nr. 04, 31. Mai 1995 (1995-05-31) & JP 07 026458 A (JAPAN VILENE CO LTD), 27. Januar 1995 (1995-01-27)

## Beschreibung

Die Erfindung begrifft einen fixierbaren Einlagestoff aus Vliesstoff zur Verwendung in der Textilindustrie, welcher wenigstens eine Lage aus schmelzgesponnenen Fasern und wenigstens einer weiteren Lage aus Fasermaterial umfasst, wobei der Einlagestoff wenigstens in Teilbereichen mit einer Haftmasse versehen ist.

Einlagestoffe sind das unsichtbare Gerüst der Bekleidung. Sie sorgen für korrekte Passformen und optimalen Tragekomfort. Je nach Anwendung unterstützen Sie die Verarbeitbarkeit, erhöhen die Funktionalität und stabilisierten die Bekleidung. Neben der Bekleidung können diese Funktionen in technischen Textilanwendungen, z.B. Möbel-, Polster- sowie der Heimtextilien-Industrie Anwendung finden

Einlagestoffe können aus Vliesstoffen, Gewebe, Gewirken oder vergleichbaren textilen Flächengebilden bestehen, die meist zusätzlich mit einer Haftmassen versehen sind, wodurch die Einlage mit einem Oberstoff meist thermisch durch Hitze und/oder Druck verklebt werden kann (Fixiereinlage). Die genannten verschiedenen textilen Flächengebilde haben unterschiedliche Eigenschaftsprofile, je nach Herstellungsverfahren. Gewebe bestehen aus Fäden/Garnen in Kette- und Schussrichtung, Gewirke bestehen aus Fäden/Garnen, die über eine Maschenbindung zu einem textilen Flächengebilde verbunden werden. Vliesstoffe bestehen aus Einzelfasern, die thermisch, mechanisch oder chemisch gebunden werden. Die unterschiedlichen Verfahren zur Herstellung von textilen Flächengebilden sind hinlänglich bekannt und bedürfen keiner Erklärung.

Die in der Bekleidung verwendeten Oberstoffe werden nach ebenfalls hinlänglich bekannten Verfahren hergestellt. Um einen möglichst homogenen Verbund zwischen Oberstoff und Einlagestoff zu erzielen, muss das Eigenschaftsprofil des Einlagestoffes zu dem des Oberstoffs passen. Wichtige Kriterien sind der Griff, die Haptik des Oberstoff/Einlagestoffverbundes, sowie gegebenenfalls die Haftung des Einlagestoffes zum Oberstoff. Weitere Anforderungen ergeben sich dann im Pflegeverhalten des Oberstoff/Einlagestoff-Verbundes z. B. bei der Wäsche oder chemischen Reinigung. Wichtige Kriterien in der Anwendung sind die Gebrauchsfähigkeit über einen langen Zeitraum bzw. das Verhalten des Einlagestoffes im Kleidungsstück im Gebrauch.

Im Oberstoffbereich gibt es eine sehr hohe Anzahl an verschiedensten Materialien, die ständig um neue Materialien mit neuen Eigenschaften ergänzt werden. Ein modischer Trend sind hierbei Oberstoffe, die sich beim Tragen reversibel an den Körper anpassen können, wodurch ein angenehmes Tragegefühl des Kleidungsstückes entsteht. Diese eigengesetzten Oberstoffe zeigen mono-, bi- bzw. multidirektionales, elastischen Verhalten, d.h. man kann diese Oberstoffe dehnen, allerdings relaxieren diese auch wieder in den Ursprungszustand. Der Oberstoff ist also in der Lage die Bewegungen des Körpers flexibel mitzumachen, wodurch gleichzeitig auch ein eher weiches, angenehmes Gefühl beim Tragen des Kleidungsstückes suggeriert wird. Vorrausetzung dafür, dass die elastischen Eigenschaften eines Oberstoffs in einem Kleidungsstück vollständig zur Wirkung kommen können, ist ein Einlagestoff, der diesen Dehn- und Relaxationsbewegungen folgen kann. Ein nicht dehnfähiger, und mit Hilfe einer Haftmasse auf einen elastischen Oberstoff fixierter Einlagestoff würde den Oberstoff in Dehnung und Relaxation behindern. Bei Einlagestoffen aus Gewebe, Gewirken Gestricken, Raschelmaterielaien o. ä. garnhaltigen Flächengebilden wird die benötigte Elastizität meist durch spezielle gekräuselte Garne oder/und spezielle textilübliche Behandlungen wie Bauschen, Schrumpfen usw. erzielt. Im textilen Flächengebilde erzielt man dadurch eine künstliche Verkürzung des Garnes, die wieder herausgedehnt werden kann und dennoch so stark ist, dass es sich elastisch zurückziehen kann.

Vliesstoffe, welche als ein verfestigtes Einzelfasergebilde definiert sind, dessen Einzelfasern mit Reibung und/oder Kohäsion bzw. Adhäsion verbunden sind, zeigen diese Verhalten normalerweise nicht. In der japanischen Offenlegungsschrift JP 2-503903 A, welche den gattungsgemäßen Stand der Technik zur vorliegenden Patentanmeldung bildet, wird ein Einlagestoff aus Vliesstoff beschrieben, der mittels eines Laminierverfahrens hergestellt wird. Der bekannte Einlagestoff besteht aus mehreren Lagen aus faserverflochtenem Vliesstoff und Faserbahnen, die miteinander laminiert werden. Wenigstens eine Lage besteht hierbei aus einem schmelzgeblasenen Vliesstoff aus ultradünnen Fasern. Der laminierte Vliesstoff wird zur Fixierung in an sich bekannter Weise wenigstens teilweise mit einer Haftmasse versehen.

Die vorliegende Erfindung liegt die Aufgabe zugrunde, einen fixierbaren Einlagestoff der gattungsgemäßen Art so weiterzubilden, dass er eine für Bekleidungsteile bzw. textile Anwendungen ausreichend hohe Elastizität aufweist.

Erfindungsgemäß wird die Aufgabe bei einem fixierbaren Einlagestoff der gattungsgemäßen Art dadurch gelöst, dass die schmelzgesponnenen Fasern aus einem elastischen Fasermaterial und die wenigstens eine Lage aus Fasermaterial aus Stapelfasern bestehen, und dass die wenigstens eine Lage aus elastischen schmelzgesponnenen Fasern und die wenigstens eine Lage aus ungebundenen Stapelfasern als unverfestigte Faserflächengebilde aufeinander abgelegt und anschließend mittels eines an sich bekannten Verfestigungsschrittes, welcher typisch bei der Vliesstoffherstellung ist, zu einen Vliesstoff verfestigt werden.

Es hat sich in überraschender Weise gezeigt, dass man bei Verwendung eines ungebundenen Faserflächengebildes aus Stapelfasern in Kombination mit einem elastischen Faserflächengebilde aus elastischen schmelzgesponnenen Fasern und anschließendem Verfestigen des Verbundes eine maximale Elastizität erhält, die bei der Herstellung eines Laminates aus einem bereits gebundenen Stapelfaservliesstoff und einem dehnfähigen Vliesstoff nicht zu erzielen wäre.

Ein Vorteil des erfindungsgemäßen Einklagestoffs ist die Elastizität in Längs-und Querrichtung des Materials, welche sich über die Legeart des Vliesstoffes, die Stapelfaserzusammensetzung, die Art des elastischen Polymers sowie die Schmelzspinn- und Verfestigungsbedingungen über einen weiten Bereich einstellen lässt. Der normalerweise übliche "gummielastomer"-ähnliche Griff von elastischen Polymeren wird durch die Verwendung von Stapelfasern maskiert und gefällig.

Erfindungsgemäß wird somit ein elastisches Material in einem Schmelzspinnprozess zu elastischen Fasern versponnen und diese Fasern werden als elastisches Faserflächengebilde abgelegt. Auf dieses elastische Faserflächengebilde wird in einem weiteren Verfahrensschritt zumindest auf einer der beiden Oberflächen ein ungebundenes Faserflächengebilde aus Stapelfasern abgelegt. Das mindestens zweilagige Faserflächengebilde aus schmelzgesponnenen Fasern und Stapelfasern wird dann mechanisch (Nadeln, Wasserstrahlverfestigung), chemisch (bindemittelgebunden) oder bevorzugt thermisch, z.B. Kalandrieren zwischen Walzen, zu einen Vliesstoff verfestigt. Während bei der Herstellung des gattungsgemäßen fixierbaren Einlagestoffs nicht nur für jede einzelne Lage ein eigener Verfestigungsprozess, sondern schließlich noch am Verbund aus den Lagen ein zusätzlicher Laminierungsprozess durchgeführt werden müssen, erfordert die Herstellung des erfindungsgemäßen Einlagestoff nur einen einzigen Verfestigungsschritt. Der erfindungsgemäße Vliesstoff ist daher einfacher und kostengünstiger herzustellen als der gattungsgemäße.

Nach einem anschließenden Beschichtungsvorgang mit einer Haftmasse nach den für Einlagestoffen üblichen Techniken, wie z.B. Pasten-, Pasten-Pulverpunkt, Hotmeltauftrag, Streubeschichtungen oder dergleichen, wenigstens in Teilbereichen der Oberfläche des Verbundes erhält man ein überraschend stark elastisches, fixierbares Produkt mit einem angenehmen Griff.

Vorzugsweise umfassen die für die schmelzgesponnenen Fasern eingesetzten Materialien elastische Polymere mit einem Schmelzpunkt von größer als 165°C, stärker bevorzugt jedoch größer als 170°C, damit das Textil einen Bügelvorgang ohne Schaden überstehen kann. Sehr geeignete elastische Polymere haben üblicherweise eine Shore A Weichheit von < 98, doch je nach Anforderung an die Elastizität können auch härtere Polymere eingesetzt werden.

Unter den elastischen Polymeren sind insbesondere Verbindungen aus der Familie der thermoplastischen Polyurethane, z.B. aliphatisch oder aromatisch aufgebaut, die z.B. polyester-, polyether-, polycaprolactonbasierend sind, bevorzugt. Weitere geeignete elastische Polymere sind z. B. Verbindungen auf Basis von z.B. Polyether-Block-Copolyamiden oder elastischen Copolyestern, wie z.B. Copolyetherester.

Nach der Verarbeitung lassen sich diese Arten von Laminatstrukturen sehr leicht durch z.B. bügeln glätten, so dass z.B. an Nahtstellen eine optisch ansprechende Struktur entsteht. Dieser Effekt wird durch die Verwendung von elastischen Polymeren mit einem niedrigen Glasumwandlungspunkt begünstigt.

Grundsätzlich geeignete Stapelfasern für das mindestens zweilagige Faserflächengebilde sind alle Faserarten, die einen Bügelvorgang ohne zu schmelzen überstehen Die eingesetzten Stapelfasern können Chemiefasern und/oder Naturfasern umfassen, wie sie bei Einlagestoffen üblich sind. Bei Chemiefasern werden thermisch stabile Fasern mit einem Schmelzpunkt > 165°C wie z.B. Polyester-, Polyamidfasern oder deren Gemische, bevorzugt. Als Chemiefaser geeignet sind auch Fasern aus unterschiedlichen Polymerkomenenten.

Bevorzugter Titerbereich ist < 2,5 dtex, doch auch gröberer Fasertiter sind für spezielle Anwendungen 2,5 bis 30 dtex einsetzbar bzw. Mischungen aus Fasern mit von 0.8 bis 30 dtex sind denkbar.

Das Gewicht des elastischen, schmelzgesponnenen, fasrigen Flächengebildes kann vorzugsweise zwischen 5 und 100 g/m² variieren. Der unverfestigte Stapelfaserflor kann ein Flächengewicht von 5 - 200 g/m² aufweisen. Nachfolgend wird die Erfindung ohne Beschränkung der Allgemeinheit anhand von Ausführungsbeispielen näher erläutert:
Bei den nachfolgenden Ausführungsbeispielen wurde für einen Vergleich von erfindungsgemäßen und gattungsgemäßen Produkten die Dehnfähigkeit der Vliesstoffeinlagen nach dem folgenden internen Verfahren bewertet:
   Auf einer speziellen Schablone wird eine Messstrecke von 20 x 20 cm aufgezeichnet. Entlang der Messtrecke wird eine Skalierung (x/y - Achse), beginnend mit dem Ende der 20 cm aufgezeichnet. Die Skalierung erfolgt in 1 cm Abschnitten - 1 cm entspricht 5% Dehnung. Eine elastische Flächenware wird zur Bestimmung ohne Spannung auf die Messstrecke von 20 x 20 cm auf den Nullpunkt gelegt, festgehalten und gedehnt, bis es zu einer Blockade kommt, bei welcher sich die Ware wieder in den Ausgangszustand zurückziehen kann. Die Dehnung bis zur Blockade des Materials wird an der Skalierung abgelesen. Die Messung wird in Längs- und Querrichtung durchgeführt und ergibt einen Dehnungswert in %.

Die Beispiele 1 bis 3 stellen erfindungsgemäße Einlagestoffe dar. Die Beispiele 4 und 5 wurden nach dem gattungsgemäßen Stand der Technik gefertigt, wobei man aufgrund der unterschiedlichen Fertigungstechniken Beispiel 2 mit Beispiel 4 und Beispiel 3 mit Beispiel 5 vergleichen sollte:

### Beispiel 1:

Ein getrocknetes (< 0,1% Feuchte) Polymer aus der Klasse der polyesterbasierenden thermoplastischen Polyurethane mit einer Shore A Härte von 85, MFI 17 bei 210°C, 2,16 kp und einem Schmelzbereich von 170-184°C (Koflerheizbank) wird mit einer Schmelzspinntechnik zu einem Faserflächengebilde versponnen. Das Faserflächengebilde hat ein Flächengewicht von 15 g/m².

Bei einem Krempelprozess wird dieses Faserflächengebilde einem Faserflor aus 10 g/m² PA Stapelfasern mit 1,7 dtex zugeführt und bei Kalandertemperaturen > 150°C verfestigt. Eine der Kalanderwalzen zeigt eine Gravur mit einer Verschweißfläche > 9%. Nach einer Doppelpunktbeschichtung (9 g/m³ Polyamid-Haftmasse, cp 52 bei 170° Trocknertemperatur) besitzt die elastische Fixiereinlage eine reversible Dehnung von mindestens 25% in Querrichtung und 13% in Längsrichtung nach Eingangs beschriebenem Test.

### Beispiel 2:

Ein getrocknetes (< 0,1% Feuchte) Polymer aus der Klasse der polyesterbasierenden thermoplastischen Polyurethane mit einer Shore A Härte von 85, MFI 17 bei 210°C, 2,16 kp und einem Schmelzbereich von 170-184°C (Koflerheizbank) wird mit einer Schmelzspinntechnik zu einem Faserflächengebilde versponnen. Das Faserflächengebilde hat ein Flächengewicht von 15 g/m².
Bei einem Krempelprozess wird dieses Faserflächengebilde einem Faserflor aus 10 g/m² PA Stapelfasern mit 1,7 dtex zugeführt und bei Kalandertemperaturen > 150°C verfestigt. Eine der Kalanderwalzen zeigt eine Gravur mit einer Verschweißfläche > 9%. Nach einer Pastenbeschichtung (10 g/m³ Polyamid-Haftmasse, cp 52 bei 120° Trocknertemperatur) besitzt die elastische Fixiereinlage eine reversible Dehnung von 50% in Querrichtung und 23% in Längsrichtung nach Eingangs beschriebenem Test.

### Beispiel 3:

Ein getrocknetes (< 0,1 % Feuchte) Polymer aus der Klasse der polyesterbasierenden thermoplastischen Polyurethane mit einer Shore A Härte von 85, MFI 17 bei 210°C, 2,16 kp und einem Schmelzbereich von 170-184°C (Koflerheizbank) wird mit einer Schmelzspinntechnik zu einem Faserflächengebilde versponnen. Das Faserflächengebilde hat ein Flächengewicht von 15 g/m².
Bei einem Krempelprozess wird dieses Faserflächengebilde einem ungebundenen Faserflor aus 10 g/m² PA Stapelfasern mit 1,7 dtex zugeführt und mittels der Wasserstrahltechnik verfestigt. Nach einer Pastenbeschichtung (9 g/m³ Polyamid-Haftmasse, cp 52 bei 120° Trocknertemperatur) besitzt die elastische Fixiereinlage eine reversible Dehnung von mindesten 40% in Querrichtung und 17% in Längsrichtung nach Eingangs beschriebenem Test.

### Beispiel 4:

Ein (< 0,1% Feuchte) Polymer aus der Klasse der polyesterbasierenden thermoplastischen Polyurethane mit einer Shore A Härte von 85, MFI 17 bei 210°C, 2,16 kp und einem Schmelzbereich von 170-184°C (Koflerheizbank) wird mit einer Schmelzspinntechnik zu Fasern versponnen. Diese Fasern werden auf einen mit PS Technik verfestigten Stapelfaservliesstoff aus 18 g/m² Stapelfasern (85%PA/15%PES) mit jeweils 1,7 dtex abgelegt und anschließend das zweilagige Gebilde aus verfestigten Stapelfaservliesstoff und Polyurethanfaserflächengebilde bei Kalandertemperaturen > 150°C verfestigt. Eine der Kalanderwalzen zeigt eine Gravur mit einer Verschweißfläche > 9%. Das Faserflächengebilde hat ein Flächengewicht von 33 g/m².
Nach einer Pastenbeschichtung (9 g/m³ Polyamid-Haftmasse, cp 52 bei 120° Trocknertemperatur) besitzt die elastische Fixiereinlage eine reversible Dehnung von ca. 20% in Querrichtung und 7% in Längsrichtung nach Eingangs beschriebenem Test.

### Beispiel 5:

Ein (< 0,1 % Feuchte) Polymer aus der Klasse der polyesterbasierenden thermoplastischen Polyurethane mit einer Shore A Härte von 85, MFI 17 bei 210°C, 2,16 kp und einem Schmelzbereich von 170-184°C (Koflerheizbank) wird mit einer Schmelzspinntechnik zu Fasern versponnen. Diese Fasern werden auf einen mit wasserstrahlverfestigten Stapelfaservliesstoff aus 18 g/m² Stapelfasern (85%PA/15%PES) mit jeweils 1,7 dtex abgelegt und anschließend das zweilagige Gebilde aus verfestigten Stapelfaservliesstoff nochmals mit Hilfe der Wasserstrahltechnik Das Faserflächengebilde hat ein Flächengewicht von 33 g/m².
Nach einer Pastenbeschichtung (9 g/m³ Polyamid-Haftmasse, cp 52 bei 120° Trocknertemperatur) besitzt der elastische Einlagestoff eine reversible Dehnung von ca. 20% in Querrichtung und 12% in Längsrichtung nach Eingangs beschriebenem Test. Dieses Material ist Beispiel 1,2,3 deutlich unterlegen.

Man erkennt, dass die erfindungsgemäßen Einlagestoffe aus Beispiel 1,2 und 3 der gattungsgemäßen hinsichtlich ihrer Dehnfähigkeit, d. h. Elastizität, deutlich überlegen sind.

## Patentansprüche

1. Fixierbarer Einlagestoff aus Vliesstoff zur Verwendung in der Textilindustrie, welcher wenigstens eine Lage aus schmelzgesponnenen Fasern und wenigstens eine weitere Lage aus Fasermaterial umfasst, wobei der Einlagestoff wenigstens in Teilbereichen mit einer Haftmasse versehen ist, **dadurch gekennzeichnet, dass** die schmelzgesponnenen Fasern aus einem elastischen Fasermaterial und die wenigstens eine Lage aus Fasermaterial aus Stapelfasern bestehen, und dass die wenigstens eine Lage aus elastischen schmelzgesponnenen Fasern und die wenigstens eine Lage aus Stapelfasern als unverfestigte Faserflächengebilde aufeinander abgelegt und anschließend mittels eines an sich bekannten Verfestigungsschrittes verfestigt werden.

2. Fixierbarer Einlagestoff nach Anspruch 1, **dadurch gekennzeichnet, dass** das Fasermaterial zu einem überwiegenden Anteil aus Stapelfasern besteht, die aus Chemie- und/oder Naturfasern bestehen.

3. Fixierbarer Einlagestoff nach Anspruch 2, **dadurch gekennzeichnet, dass** die Chemiefasern einen Schmelzpunkt > 165 °C besitzen.

4. Fixierbarer Einlagestoff nach Anspruch 3, **dadurch gekennzeichnet, dass** die Chemiefasern Ein- und/oder Mehrkomponenten-Fasern aus Polyester und/oder Polyamid oder Fasermischungen aus diesen Komponenten umfassen.

5. Fixierbarer Einlagestoff nach einem der Ansprüche 1 bis 4, **dadurch gekennzeichnet, dass** die elastischen Fasern elastische Polymere mit einem Schmelzpunkt > 165 °C, bevorzugt > 170°C umfassen.

6. Fixierbarer Einlagestoff nach Anspruch 5, **dadurch gekennzeichnet, dass** die elastischen Polymere eine Shore-Weichheit von < 98 aufweisen.

7. Fixierbarer Einlagestoff nach Anspruch 5 oder 6, **dadurch gekennzeichnet, dass** die elastischen Polymere Verbindungen aus der Familie der thermoplastischen Polyurethane und/oder Verbindungen auf Basis von Polyesther-Block-Copolyamiden und/oder elastischen Copolyestern, insbesondere Copolyetherester, umfassen.

8. Fixierbarer Einlagestoff nach Anspruch 7, **dadurch gekennzeichnet, dass** die thermoplastischen Polyurethane aliphatisch oder aromatische aufgebaut sind.

9. Fixierbarer Einlagestoff nach Anspruch 7 oder 8, **dadurch gekennzeichnet, dass** die thermoplastischen Polyurethane polyester-, polyether- oder polycabrolactonbasierend sind.

10. Fixierbarer Einlagestoff nach einem der Ansprüche 1 bis 9, **dadurch gekennzeichnet, dass** die Stapelfasern einen Fasertiter < 2,5 dtex aufweisen.

11. Fixierbarer Einlagestoff nach einem der Ansprüche 1 bis 10, **dadurch gekennzeichnet, dass** das unverfestigte Faserflächengebilde aus Stapelfasern ein Flächengewicht im Bereich von 1-100 g/m² ausweist.

12. Fixierbarer Einlagestoff nach einem der Ansprüche 1 bis 11, **dadurch gekennzeichnet, dass** das unverfestigte Faserflächengebilde aus schmelzgesponnenen elastischen Fasern ein Flächengewicht im Bereich von 5 - 200 g/m² aufweist.

## Claims

1. Fusible interlining of nonwoven for use in the textile industry, comprising at least one ply of melt-spun fibres and at least one further ply of fibrous material, wherein an adhesive material is provided to the interlining in sub-regions at least, **characterized in that** the melt-spun fibres consist of an elastic fibrous material and at least one ply of fibrous material consists of staple fibres, and **in that** the at least one ply of elastic melt-spun fibres and the at least one ply of staple fibres are laid down one on top of the other as unconsolidated fibrous sheet bodies and subsequently consolidated by means of a conventional consolidating step.

2. Fusible interlining according to Claim 1, **characterized in that** the fibrous material consists predominantly of staple fibres which consist of manufactured and/or natural fibres.

3. Fusible interlining according to Claim 2, **characterized in that** the manufactured fibres have a melting point > 165°C.

4. Fusible interlining according to Claim 3, **characterized in that** the manufactured fibres comprise one- and/or multi-component fibres of polyester and/or polyamide or fibrous blends of these components.

5. Fusible interlining according to any one of Claims 1 to 4, **characterized in that** the elastic fibres comprise elastic polymers having a melting point > 165°C, preferably > 170°C.

6. Fusible interlining according to Claim 5, **characterized in that** the elastic polymers have a Shore softness of < 98.

7. Fusible interlining according to Claim 5 or 6, **characterized in that** the elastic polymers comprise compounds from the family of thermoplastic polyurethanes and/or compounds based on polyether block copolyamides and/or elastic copolyesters, more particularly copolyether esters.

8. Fusible interlining according to Claim 7, **characterized in that** the thermoplastic polyurethanes have an aliphatic or aromatic construction.

9. Fusible interlining according to Claim 7 or 8, **characterized in that** the thermoplastic polyurethanes are polyester, polyether or polycaprolactone based.

10. Fusible interlining according to any one of Claims 1 to 9, **characterized in that** the staple fibres have a fibre linear density < 2.5 dtex.

11. Fusible interlining according to any one of Claims 1 to 10, **characterized in that** the unconsolidated fibrous sheet body of staple fibres has a basis weight in the range of 1 - 100 g/m².

12. Fusible interlining according to any one of Claims 1 to 11, **characterized in that** the unconsolidated fibrous sheet body of melt-spun elastic fibres has a basis weight in the range of 5 - 200 g/m².

## Revendications

1. Doublure en non-tissé pouvant être fixée, destinée à être utilisée dans l'industrie textile, qui comprend au moins une couche de fibres filées en fusion et au moins une couche supplémentaire d'un matériau fibreux, la doublure étant munie d'une masse adhésive au moins dans des régions, **caractérisée en ce que** les fibres filées en fusion sont constituées d'un matériau fibreux élastique et la ou les couches d'un matériau fibreux sont constitués de fibres courtes, et **en ce que** la ou les couches de fibres élastiques filées en fusion et la ou les couches de fibres courtes sont placées les unes sur les autres sous la forme d'une structure fibreuse plate non solidifiée, puis solidifiées par une étape de solidification connue.

2. Doublure pouvant être fixée selon la revendication 1, **caractérisée en ce que** le matériau fibreux est constitué en majorité par des fibres courtes constituées de fibres synthétiques et/ou naturelles.

3. Doublure pouvant être fixée selon la revendication 2, **caractérisée en ce que** les fibres synthétiques présentent un point de fusion > 165 °C.

4. Doublure pouvant être fixée selon la revendication 3, **caractérisée en ce que** les fibres synthétiques comprennent des fibres mono- et/ou multicomposantes en polyester et/ou polyamide ou des mélanges de fibres de ces composants.

5. Doublure pouvant être fixée selon l'une quelconque des revendications 1 à 4, **caractérisée en ce que** les fibres élastiques comprennent des polymères élastiques ayant un point de fusion > 165 °C, de préférence > 170 °C.

6. Doublure pouvant être fixée selon la revendication 5, **caractérisée en ce que** les polymères élastiques présentent une souplesse Shore < 98.

7. Doublure pouvant être fixée selon la revendication 5 ou 6, **caractérisée en ce que** les polymères élastiques comprennent des composés de la famille des polyuréthannes thermoplastiques et/ou des composés à base de polyéther-copolyamides séquencés et/ou des copolyesters élastiques, notamment des copolyétheresters.

8. Doublure pouvant être fixée selon la revendication 7, **caractérisée en ce que** les polyuréthannes thermoplastiques sont conçus sous forme aliphatique ou aromatique.

9. Doublure pouvant être fixée selon la revendication 7 ou 8, **caractérisée en ce que** les polyuréthannes thermoplastiques sont à base de polyester, de polyéther ou de polycaprolactone.

10. Doublure pouvant être fixée selon l'une quelconque des revendications 1 à 9, **caractérisée en ce que** les fibres courtes présentent un titre de fibre < 2,5 dtex.

11. Doublure pouvant être fixée selon l'une quelconque des revendications 1 à 10, **caractérisée en ce que** la structure fibreuse plate non solidifiée en fibres courtes présente un poids superficiel dans la plage allant de 1 à 100 g/m².

12. Doublure pouvant être fixée selon l'une quelconque des revendications 1 à 11, **caractérisée en ce que** la structure fibreuse plate non solidifiée en fibres élastiques filées en fusion présente un poids superficiel dans la plage allant de 5 à 200 g/m².
